(19) Europäisches Patentamt
European Patent Office
Office européen des brevets

(11) **EP 4 054 859 B1**

## (12) FASCICULE DE BREVET EUROPEEN

(45) Date de publication et mention
de la délivrance du brevet:
**25.10.2023 Bulletin 2023/43**

(21) Numéro de dépôt: **20816283.4**

(22) Date de dépôt: **06.11.2020**

(51) Classification Internationale des Brevets (IPC):
*B60C 11/03* (2006.01)    *B60C 11/13* (2006.01)

(52) Classification Coopérative des Brevets (CPC):
**B60C 11/0302; B60C 11/0311; B60C 11/0316;**
**B60C 11/1392;** B60C 11/1218; B60C 11/1281;
B60C 11/1384; B60C 2011/0313; B60C 2011/133

(86) Numéro de dépôt international:
**PCT/FR2020/052023**

(87) Numéro de publication internationale:
**WO 2021/089962 (14.05.2021 Gazette 2021/19)**

(54) **PNEUMATIQUE COMPORTANT UNE BANDE DE ROULEMENT**

REIFEN MIT LAUFFLÄCHE

TYRE COMPRISING A TREAD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.11.2019 FR 1912449**

(43) Date de publication de la demande:
**14.09.2022 Bulletin 2022/37**

(73) Titulaire: **COMPAGNIE GENERALE DES
ETABLISSEMENTS MICHELIN
63000 Clermont-Ferrand (FR)**

(72) Inventeurs:
• **FABING, Daniel**
**63040 CLERMONT-FERRAND Cedex 9 (FR)**
• **BOISDON, Bertrand**
**63040 CLERMONT-FERRAND Cedex 9 (FR)**
• **LABROUSSE, Jerome**
**63040 CLERMONT-FERRAND Cedex 9 (FR)**
• **VANTAL, Marie-Hélène**
**63040 CLERMONT-FERRAND Cedex 9 (FR)**

(74) Mandataire: **Le Cam, Stéphane Georges Elie
Manufacture Française des
Pneumatiques Michelin
DCJ/PI - F35 - Ladoux
23, place des Carmes-Déchaux
63040 Clermont-Ferrand Cedex 9 (FR)**

(56) Documents cités:
EP-A1- 1 097 826    EP-A1- 2 516 181
EP-A1- 3 383 671    JP-A- H09 254 609
JP-A- H11 180 115

## Description

### Domaine technique

La présente invention concerne un pneumatique pour véhicule automobile dit pneumatique « quatre saisons ». L'invention est plus particulièrement adaptée pour un pneumatique destiné à équiper un véhicule de tourisme ou une camionnette.

### Technique antérieure

De manière connue, un pneumatique dit quatre saisons est un pneumatique qui présente un excellent compromis d'adhérence sur sol enneigé/sol mouillé tout en préservant les performances sur sol sec. Ces pneumatiques ont pour objectif de rouler en sécurité toute l'année quelle que soit la météo. Ils ont généralement reçu la certification hiver 3PMSF (pour 3 Peak Mountain Snow Flake) attestant de leurs excellentes performances sur sol enneigé et sur sol mouillé. Cette certification est notamment indiquée sur l'un ou les deux flancs de ces types de pneumatiques.

Le document WO2016/134988 divulgue un pneumatique quatre saisons présentant une bande de roulement comportant deux bords et un centre. Ladite bande de roulement est directionnelle et elle comporte une pluralité de blocs en matériau caoutchoutique. Plus particulièrement, chaque bloc de la pluralité de blocs présente une zone centrale s'étendant globalement selon un angle β1, ledit angle β1 étant au moins supérieur à 35 degrés et au plus inférieur à 65 degrés avec une direction axiale. Chaque bloc de la pluralité de blocs comporte également une zone de bord s'étendant globalement selon un angle β3 au moins supérieur à 0 degré et au plus inférieur à 10 degrés avec ladite direction axiale. Enfin, chaque bloc de la pluralité de blocs comporte une zone intermédiaire entre la zone centrale et la zone de bord du bloc, ladite zone intermédiaire faisant un angle β2 avec ladite direction axiale.

Le document EP 3383671A1, JP H09254609A, EP 1097826A1, EP 2516181A1, EP 2516181A1, et JP H11180115A décrivent également un pneumatique pour un usage dans des conditions hivernales doté d'une bande de roulement avec une sculpture comportant blocs entaillés.

Il existe un besoin constant d'améliorer les performances des pneumatiques quatre saisons tant sur le compromis d'adhérence entre un sol enneigé et un sol mouillé que pour l'adhérence sur sol sec.

### Exposé de l'invention

La présente invention vise à remédier au moins en partie à ce besoin.

Plus particulièrement, la présente invention vise à améliorer le compromis d'adhérence sur sol enneigé/sol mouillé pour un pneumatique quatre saisons tout en améliorant les performances d'adhérence sur sol sec.

L'invention concerne un pneumatique selon la revendication 1.

Par « pneumatique », on entend tous les types de bandage en matériau caoutchoutique soumis en roulage à une pression interne ou non soumis à une telle pression interne en roulage (c'est le cas d'un bandage sans air comprimé, par exemple, de type Tweel™).

Plus particulièrement, l'invention concerne un pneumatique comportant une bande de roulement directionnelle de largeur W.

La bande de roulement comporte deux bords et un centre C. Les bords délimitent des frontières avec cette bande de roulement et deux flancs. Le centre C divise la bande de roulement en deux parties de largeur sensiblement égale. La bande de roulement comporte sur une de ses deux parties une pluralité d'ensembles de bloc se succédant selon une direction circonférentielle.

Par « direction circonférentielle », on entend une direction qui est tangente à tout cercle centré sur l'axe de rotation. Cette direction est perpendiculaire à la fois à une direction axiale et à une direction radiale.

Par « direction axiale », on entend une direction parallèle à l'axe de rotation du pneumatique.

Par « direction radiale », on entend une direction qui est perpendiculaire à l'axe de rotation du pneumatique (cette direction correspond à la direction de l'épaisseur de la bande de roulement au centre de ladite bande de roulement).

Chaque ensemble de bloc comporte au moins un bloc. Par « bloc », on entend un élément en relief délimité par des rainures et comprenant des parois latérales et une face de contact, cette dernière étant destinée à venir en contact avec un sol pendant le roulage. Dans le cas où l'ensemble de bloc ne comporte qu'un seul bloc, ledit ensemble de bloc et ledit bloc sont confondus.

Par « rainure », on entend une entaille dont la distance entre les parois de matière qui délimitent ladite rainure est supérieure à 2 mm et dont la profondeur est supérieure ou égale à 1 mm.

Par « incision », on entend une entaille dont la distance entre les parois de matière qui délimitent ladite incision est inférieure ou égale à 2 mm et dont la profondeur est supérieure ou égale à 1 mm.

Chaque ensemble de bloc s'étend d'un des bords de la bande de roulement vers le centre de ladite bande de roulement selon une certaine courbure non nulle. Les ensembles de bloc ainsi courbés définissent le caractère directionnel de la bande de roulement.

Chaque ensemble de bloc a un volume total VT de matière caoutchoutique. Par « matériau caoutchoutique », on entend un matériau polymérique de type mélange élastomérique, c'est-à-dire un matériau polymérique obtenu par mélangeage d'au moins un élastomère, d'au moins une charge renforçante et d'un système de réticulation.

Chaque ensemble de bloc est délimité par des faces latérales, une surface de fond et une surface de contact. Le volume total VT de matière caoutchoutique correspond au volume de matière contenu par l'ensemble de bloc entre ces différentes limites. Le volume total VT de matière caoutchoutique ne comprend pas le volume occupé par les entailles (rainure, incision) dans l'ensemble de bloc.

Parmi les faces latérales de l'ensemble de bloc, on distingue une face d'attaque et une face de fuite.

Par « face d'attaque », on entend la face dudit ensemble de bloc qui entre en contact la première avec la chaussée, dans un sens de roulement préférentiel du pneumatique. La face d'attaque de l'ensemble de bloc s'étend uniquement sur une même côté de l'ensemble de bloc. Ainsi, si l'ensemble de bloc comprend seulement un bloc, la face d'attaque de l'ensemble de bloc s'étend sur une paroi latérale de ce bloc. Si l'ensemble de bloc comprend plusieurs blocs, la face d'attaque de l'ensemble de blocs s'étend sur plusieurs parois latérales de différents blocs.

Par « face de fuite », on entend la face dudit ensemble de bloc qui entre en contact en dernière avec la chaussée, dans un sens de roulement préférentiel du pneumatique. La face de fuite de l'ensemble de bloc s'étend uniquement sur un même côté de l'ensemble de bloc. Ainsi, si l'ensemble de bloc comprend seulement un bloc, la face de fuite de l'ensemble de bloc s'étend une paroi latérale de ce bloc. Si l'ensemble de bloc comprend plusieurs blocs, la face de fuite de l'ensemble de blocs s'étend sur plusieurs parois latérales de différents blocs.

Pour au moins un ensemble de bloc, le pneumatique comprend un ensemble de cavités comprenant au moins une cavité. Par « cavité », on entend une entaille de type rainure ou de type incision qui débouche sur une face latérale de l'ensemble de bloc, lorsque la bande de roulement est dans un état neuf.

L'ensemble de cavités s'étend sur la face de fuite dudit ensemble de bloc. La bande de roulement comporte un fond radialement à l'intérieur de ladite bande de roulement et l'ensemble de bloc a une hauteur H. L'ensemble de cavités est entre le fond de la bande de roulement et la moitié de ladite hauteur H.

La face de fuite de l'ensemble de bloc est particulièrement sollicitée lors d'un freinage du véhicule. Au cours de ce freinage, les interactions mécaniques entre l'ensemble de bloc et le sol sont importantes. Plus particulièrement, au cours de ce freinage, l'ensemble de bloc est en contact avec le sol au niveau de la surface de contact de l'ensemble de bloc. L'ensemble de bloc a tendance à glisser sur le sol et une surpression s'applique à proximité de la face de fuite. Cette surpression, si elle est trop intense, peut engendrer un décollement de la surface de contact avec le sol entraînant une dégradation au freinage du pneumatique. L'ensemble de cavités présent sur la face de fuite diminue la rigidité de cet ensemble de cavités. Les surpressions trop intenses en cas de freinage sont diminuées. L'adhérence sur un sol sec du pneumatique au cours d'un freinage est alors améliorée. En outre, à un certain niveau d'usure de la bande de roulement, l'ensemble de cavités s'ouvre sur la surface de la bande de roulement apportant un surplus de creux sur cette surface de bande de roulement. Ce creux supplémentaire permet de maintenir une bonne adhérence du pneumatique sur un sol humide ou sur un sol enneigé et ceci malgré l'usure de la bande de roulement.

Dans un mode de réalisation préférentiel, l'ensemble de cavités présente une forme concave de rayon r, dans lequel ledit rayon r est au moins égal à 0,5 mm et au plus égal à 1,5 mm.

Dans un mode de réalisation préférentiel, l'ensemble de cavités a une profondeur p, ladite profondeur p étant au moins égale à 0,2 mm et au plus égale à 1,5 mm. Préférentiellement, la profondeur p est au moins égale à 0,5 mm et au plus égale à 1 mm.

Selon l'invention, l'ensemble de bloc comprend une incision s'étendant dans la longueur dudit ensemble de bloc. L'ensemble de bloc comprend un autre ensemble de cavités s'étendant à partir de l'incision médiane en direction de la face d'attaque de l'ensemble de bloc. L'autre ensemble de cavités est radialement à un même niveau que l'ensemble de cavités de la face de fuite dudit l'ensemble de bloc.

Dans un mode de réalisation préférentiel, l'ensemble de bloc comprend une pluralité d'entailles, par exemple des rainures, des incisions, ou des cavités, qui définissent un volume d'entailles VE dans l'ensemble de bloc. Le rapport entre le volume d'entailles VE sur le volume total de matière caoutchoutique VT de l'ensemble de bloc déterminant un taux d'entaillement volumique TEV tel que TEV=VE/VT. Le taux d'entaillement volumique est au moins égal à 0,24 et au plus égal à 0,35.

Dans un mode de réalisation préférentiel, tout ou partie des entailles forme une ou plusieurs incisions sur la surface de contact de l'ensemble de bloc selon une densité d'incision SD. Cette densité d'incision SD correspond au rapport entre une somme de la/des longueur(s) projetée(s) de la/des incision(s) selon une direction axiale sur le produit d'un pas P associé à l'ensemble de bloc et de la moitié de la largeur W de la bande de roulement, l'ensemble étant multiplié par 1000, tel que

$$SD = \frac{\sum_{i=1}^{n} lpyi}{P*W/2} * 1000$$

, avec n le nombre d'incisions dans le motif et lpyi la longueur projetée de la i ième incision. La densité d'incision SD dans l'ensemble de bloc est au moins égale à 10 mm$^{-1}$ et au plus égale à 70 mm$^{-1}$.

Dans un mode de réalisation préférentiel, dans la bande de roulement à l'état neuf, l'ensemble de bloc a une hauteur maximale au moins égale à 5,5 mm et au plus égale à 9 mm, et de préférence au plus égale à 7,5 mm.

Dans un mode de réalisation préférentiel, la composition du matériau caoutchoutique des blocs a une température de transition vitreuse Tg comprise entre -40°C et -10°C et préférentiellement entre -35°C et -15°C et un module complexe de cisaillement dynamique G* mesuré à 60°C compris entre 0,5 MPa et 2 MPa, et préférentiellement entre 0,7 MPa et 1,5 MPa.

Une caractéristique physique usuelle d'un mélange élastomérique est sa température de transition vitreuse Tg, température à laquelle le mélange élastomérique passe d'un état caoutchouteux déformable à un état vitreux rigide. La température de transition vitreuse Tg d'un mélange élastomérique est généralement déterminée lors de la mesure des propriétés dynamiques du mélange élastomérique, sur un viscoanalyseur (Metravib VA4000), selon la norme ASTM D 5992-96. La mesure des propriétés dynamiques est réalisée sur un échantillon de mélange élastomérique vulcanisé, c'est-à-dire cuit jusqu'à un taux de conversion d'au moins 90%, l'échantillon ayant la forme d'une éprouvette cylindrique ayant une épaisseur égale à 2 mm et une section égale à 78,5 mm$^2$. On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G", et la perte dynamique tg$\delta$, égale au rapport G"/G'. La température de transition vitreuse Tg est la température à laquelle la perte dynamique tg$\delta$ atteint un maximum lors du balayage en température. La valeur de G* mesurée à 60°C est représentative de la rigidité du matériau caoutchoutique, c'est-à-dire de sa résistance à la déformation élastique.

Dans un mode de réalisation préférentiel, le pneumatique a une certification hiver 3PMSF, ladite certification étant indiquée sur un flanc du pneumatique.

La présente invention sera mieux comprise à la lecture de la description détaillée de modes de réalisation pris à titre d'exemples nullement limitatifs et illustrés par les dessins annexés sur lesquels :

La figure 1 est une vue schématique en perspective d'un pneumatique selon l'art antérieur ;
La figure 2 est vue schématique en perspective d'une coupe partielle d'un pneumatique selon un autre art antérieur ;
La figure 3 est une vue de détail partielle d'une bande de roulement à l'état neuf d'un pneumatique conforme à un premier mode de réalisation de l'invention ;
La figure 4 est une vue agrandie d'un bloc de la bande de roulement de la figure 3 ;
La figure 5 est une vue en perspective du bloc de la figure 4 ;
La figure 6 est une autre vue en perspective partielle du bloc de la figure 4, centrée sur une cavité ;
La figure 7 est une vue schématique en coupe radiale du bloc de la figure 4 réalisée au niveau de la cavité de la figure 6 selon un mode de réalisation qui n'est pas selon l'invention; -
La figure 8 illustre les niveaux de pression sur le bloc de la figure 4, au cours d'un freinage sur un sol sec selon un mode de réalisation qui n'est pas selon l'invention; -
La figure 9 est une vue schématique en coupe d'un bloc de bande de roulement conforme à un mode de réalisation de l'invention.

L'invention n'est pas limitée aux modes de réalisation et variantes présentées et d'autres modes de réalisation et variantes apparaîtront clairement à l'homme du métier.

Sur les différentes figures, les éléments identiques ou similaires portent les mêmes références.

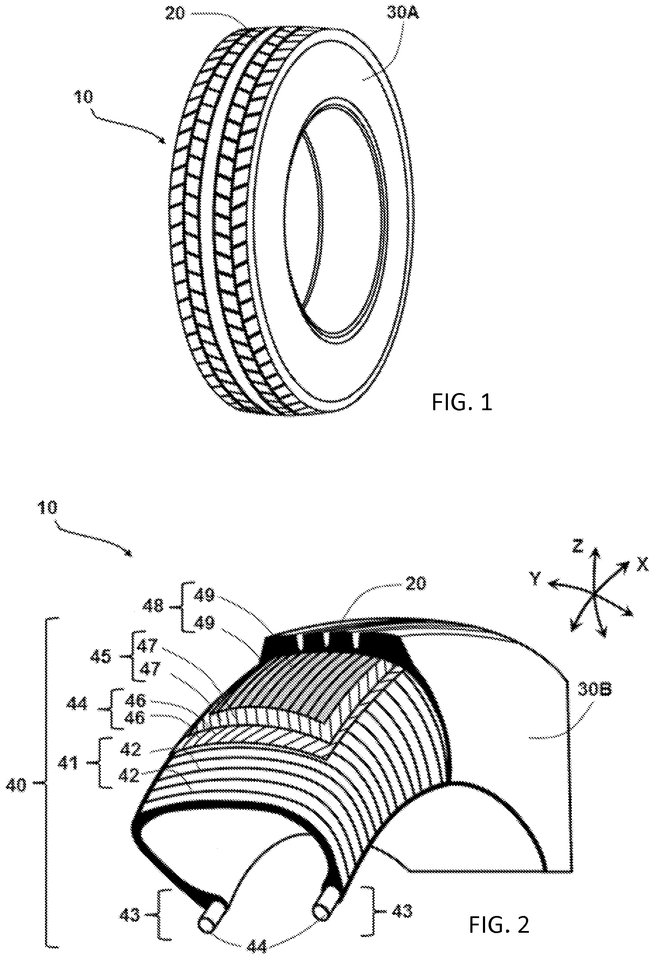

La figure 1 représente schématiquement un pneumatique 10 selon l'art antérieur. Ce pneumatique 10 comporte une bande de roulement 20 et deux flancs 30A, 30B (dont un seul est ici représenté), ladite bande de roulement 20 et lesdits flancs 30A, 30B recouvrant une carcasse 40 (non représentée sur la figure 1). La figure 2 détaille plus particulièrement la carcasse 40 d'un pneumatique 10 conforme à l'art antérieur. Cette carcasse 40 comprend ainsi une armature de carcasse 41 constituée de fils enrobés 42 de composition caoutchouteuse, et deux bourrelets 43 comportant chacun des armatures de renforcement circonférentielles 44 (ici, des tringles) qui maintiennent le pneumatique 10 sur une jante (non représentée). L'armature de carcasse 41 est ancrée dans chacun des bourrelets 43. La carcasse 40 comporte en outre une armature de sommet comprenant deux nappes de travail 44 et 45. Chacune des nappes de travail 44 et 45 est renforcée par des éléments de renforcement 46 et 47 filaires qui sont parallèles dans chaque couche et croisés d'une couche à l'autre, en faisant avec la direction circonférentielle X des angles compris entre 10° et 70°.

Le pneumatique comporte en outre une armature de frettage 48, disposée radialement à l'extérieur de l'armature de sommet. Cette armature de frettage 48 est formée d'éléments de renforcement 49 orientés circonférentiellement et enroulés en spirale. Le pneumatique 10 représenté sur la figure 2 est un pneu « tubeless ». Il comprend une gomme intérieure en composition caoutchouteuse imperméable au gaz de gonflage et recouvrant la surface intérieure du pneumatique.

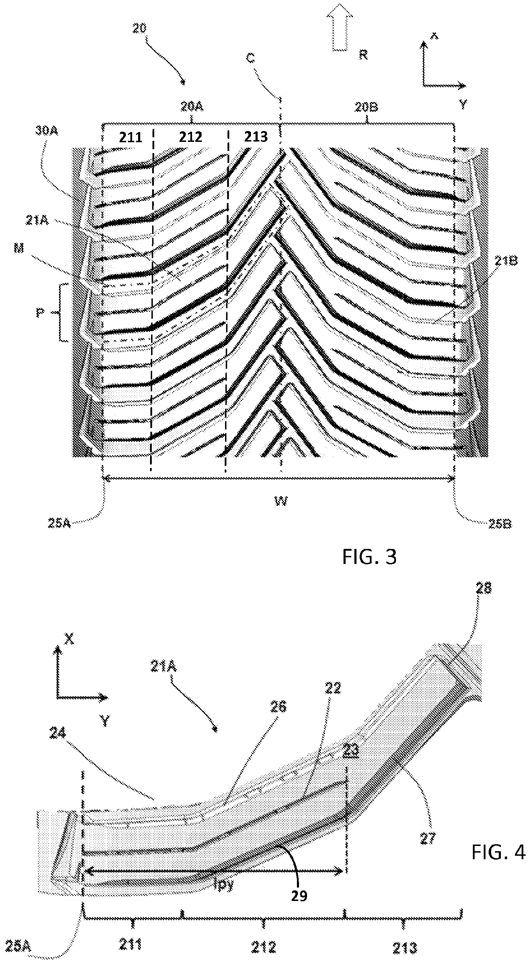

La figure 3 est une vue de détail partielle d'une bande de roulement 20 selon l'invention. La bande de roulement 20 est ici à l'état neuf. Cette bande de roulement 20 comprend deux parties de bande de roulement 20A, 20B de largeur sensiblement identique W/2. Chaque partie de bande de roulement 20A, 20B comprend respectivement une pluralité d'ensembles de bloc 21A, 21B. Les ensembles de bloc se succèdent selon une direction circonférentielle. Plus particulièrement, un ensemble de bloc appartient à un motif M de pas P. Ce motif M est répété n fois sur la circonférence du pneumatique. Cette répétition peut se faire à iso-dimension. La bande de roulement est dite alors monopas. En variante, cette répétition peut se faire avec différents coefficients d'agrandissement. La bande de roulement est dite alors multipas.

Chaque ensemble de bloc 21A, 21B s'étend respectivement d'un des bords 25A, 25B de la bande de roulement 20 jusqu'à l'axe central C selon une courbure non nulle. L'axe central C comprend ainsi une alternance de blocs 21A, 21B ayant respectivement comme origine les bords 25A, 25B de la bande de roulement 20. La bande de roulement 20 est dite ici directionnelle, c'est-à-dire que les blocs 21A, 21B sont spécifiquement agencés pour optimiser les caractéristiques comportementales du pneumatique en fonction d'un sens de rotation prédéterminé. Ce sens de rotation est classiquement indiqué par une flèche sur le flanc du pneumatique (flèche notée R sur la figure 3).

Dans le mode de réalisation de la figure 1, chaque ensemble de bloc 21A, 21B comprend un seul bloc. En variante, l'ensemble de bloc peut comprendre un nombre de blocs supérieur ou égal à 2. Dans chaque ensemble de bloc, les blocs sont alors séparés par au moins une rainure. Cette rainure s'étend selon une direction axiale ou selon une direction oblique ayant à la fois une composante non nulle selon la direction circonférentielle et une composante non nulle selon la direction axiale.

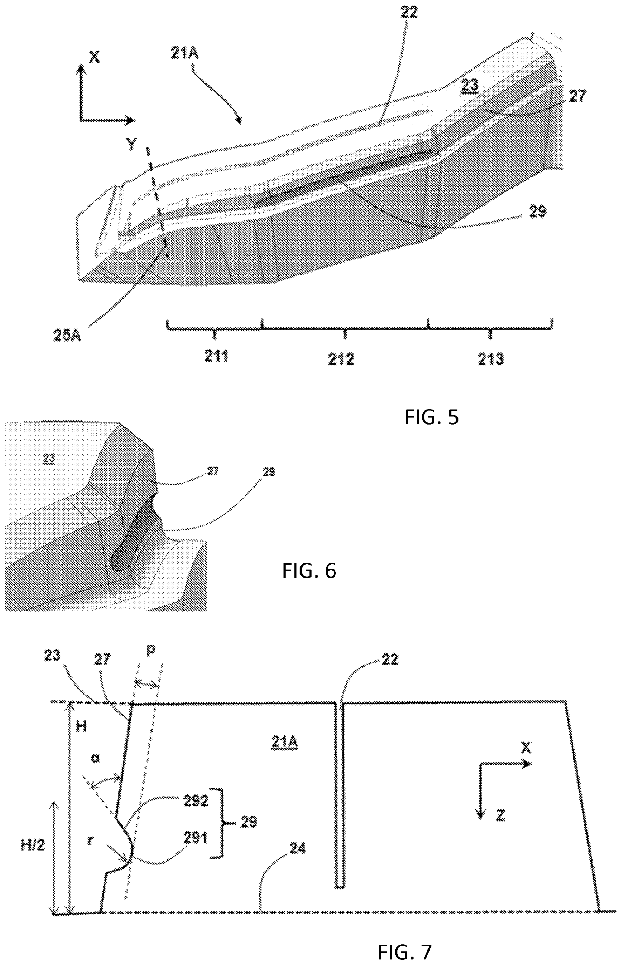

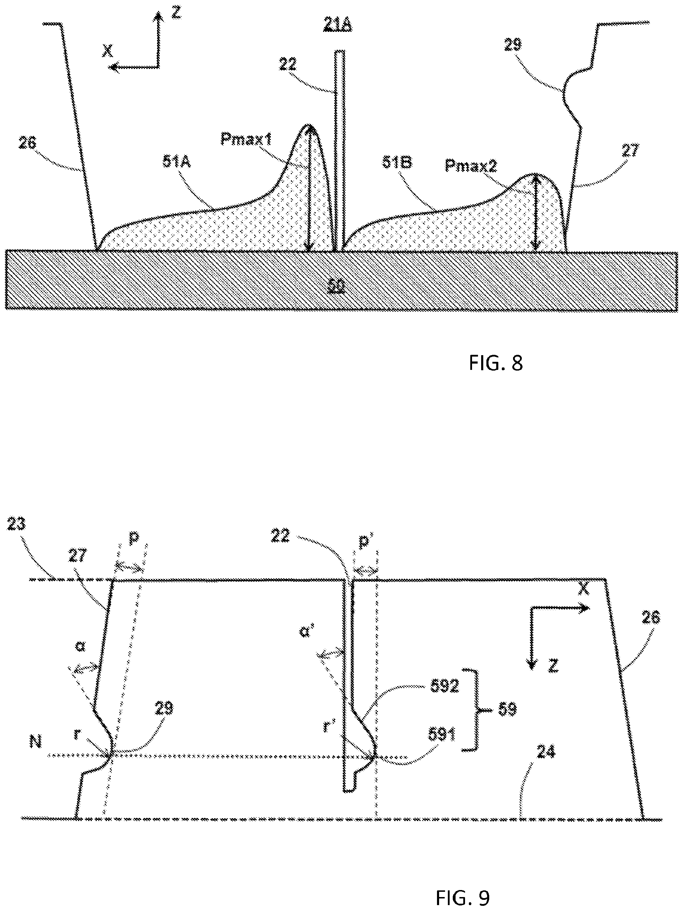

On notera que les blocs ont une hauteur maximale au moins égale à 5,5 mm et au plus égale à 9 mm. Préférentiellement, la hauteur maximale des blocs est au plus égale à 7,5 mm. Cette hauteur maximale est mesurée pour les blocs au niveau de l'axe central C. Elle correspond à la distance entre une surface de roulement 23, (illustrée à la figure 7 et à la figure 9) de la bande de roulement et une surface de fond 24 (illustrée à la figure 7 et à la figure 9). La hauteur maximale d'un bloc correspond à la profondeur maximale des rainures qui délimitent ce bloc.

Par « surface de roulement » 23 de bande de roulement 20, on entend la surface qui regroupe l'ensemble des points du pneumatique qui vont entrer en contact avec un sol dans des conditions usuelles de roulage. Ces points qui vont entrer en contact avec le sol appartiennent aux faces de contact des blocs. Pour un pneumatique, les « conditions usuelles » de roulage sont les conditions d'utilisation définies par la norme ETRTO (European Tyre and Rim Technical Organisation). Ces conditions d'utilisation précisent la pression de gonflage de référence correspondant à la capacité de charge du pneu indiquée par son indice de charge et à son code vitesse. Ces conditions d'utilisation peuvent aussi être dites « conditions nominales » ou « conditions d'usage ».

Par « surface de fond » 24, on entend une surface théorique qui passe par les points radialement intérieurs des rainures de la bande de roulement 20. Elle délimite ainsi la frontière entre la bande de roulement 20 et la carcasse 40 du pneumatique. Cette surface de fond 24 s'étend entre un premier bord 25A et un second bord 25B de la bande de roulement 20.

Pour rappel, par « bord » 25A, 25B de la bande de roulement 20 on entend les limitent respectives entre la bande de roulement 20 et les flancs 30A, 30B. Ces deux bords 25A, 25B sont distants entre eux de la valeur W correspondant à la largeur de la bande de roulement 20. Ces deux bords 25A, 25B sont situés à une même distance par rapport à l'axe central C.

On notera également qu'une certification hiver 3PMSF est indiqué sur au moins un des flancs 30A, 30B du pneumatique.

La figure 4 est une vue agrandie de l'ensemble de bloc 21A de la figure 3. Cet ensemble de bloc 21A est délimité par une surface de contact 23, une surface de fond 24 et des faces latérales 26, 27, 28. Parmi ces faces latérales, on distingue une face d'attaque 26, une face de fuite 27 et une face centrale 28. La surface de contact 23, la surface de fond 24, la face d'attaque 26, la face de fuite 27, la face centrale 28 et le bord 25A délimitent le volume total VT de matière caoutchoutique contenu dans l'ensemble de bloc 21A.

Le volume total VT de matière caoutchoutique contenu dans l'ensemble de bloc 21A peut être déterminé de la manière suivante :

- on isole l'ensemble de bloc 21A du reste de la bande de roulement ;

- on pèse l'ensemble de bloc 21A à l'état neuf ;

- on vient ensuite raboter cet ensemble de bloc jusqu'à atteindre l'usure maximale, c'est-à-dire jusqu'à atteindre la surface de fond 24 ;

- on pèse l'ensemble de bloc 21A ainsi raboté ;

- la différence de masse entre l'ensemble de bloc 21A à l'état neuf et l'ensemble de bloc à l'état usé donne la masse de matériau caoutchoutique contenue dans l'ensemble de bloc 21A ;

- on détermine le volume total VT de matière caoutchoutique à partir de la masse de matériau caoutchoutique contenue dans l'ensemble de bloc 21A et de la masse volumique de ce matériau caoutchoutique.

Une autre méthode pour la détermination du volume total VT de matière caoutchoutique contenu dans l'ensemble de bloc 21A consisterait à utiliser pleinement les possibilités des scanners 3D adaptés pour numériser directement le volume d'un objet complexe. Un tel exemple de scanner est par exemple la machine de mesure TMM-570 de la société WOLF & BECK utilisant une sonde laser.

L'ensemble de bloc 21A est ici divisé en trois parties principales, comprenant une partie de bord 211, une partie intermédiaire 212 prolongeant la partie de bord 211, une partie centrale 213 prolongeant la partie intermédiaire 212. Chacune des parties principales de l'ensemble de bloc 21A a ici une direction d'extension principale qui lui est propre. Ainsi, la partie de bord 211 a une direction d'extension principale globalement parallèle à la direction axiale Y. La partie centrale 213 est fortement inclinée par rapport à la direction axiale Y et la partie intermédiaire 212 a une inclinaison comprise entre l'inclinaison de la partie de bord 211 et l'inclinaison de la partie centrale 213. L'ensemble de bloc 21A présente alors globalement une courbure non nulle.

De plus, l'ensemble de bloc 21A comprend une incision 22 qui s'étend dans la longueur dudit ensemble de bloc 21A. Plus particulièrement, l'incision 22 s'étend dans la partie de bord 211 et la partie intermédiaire 212. Cette incision 22 suit l'inclinaison de la partie de bord 211 et de la partie intermédiaire 212. Dans ces deux parties 211,212 l'incision 22 sépare l'ensemble de bloc 21A en deux zones de largeur globalement identique. On notera ici que l'incision 22 ne s'étend pas dans la partie centrale 213 de l'ensemble de bloc 21A. L'incision 22 a une longueur projetée Lpy selon la direction axiale Y. Il est ainsi possible de déterminer une densité d'incision SD dans l'ensemble de bloc 21A. Cette densité d'incision SD correspond au rapport entre la longueur projetée Lpy de l'incision 22 sur le produit du pas P du motif M contenant l'ensemble de bloc 21A et de la moitié de la largeur W de la bande de roulement, l'ensemble étant multiplié par 1000, tel que

$$SD = \frac{\sum_{i=1}^{n} lpyi}{P*W/2} * 1000$$

. La densité d'incision SD est ici au moins égale à 10 mm$^{-1}$ et au plus égale à 70 mm$^{-1}$.

L'ensemble de bloc 21A comprend également un ensemble de cavités 29. Cet ensemble de cavités 29 est notamment visible aux figures 5 à 7. L'ensemble de cavités 29 comprend ici une seule cavité qui s'étend sur la face de fuite 27 de l'ensemble de bloc 21A. L'ensemble de cavités 29 est ainsi disposé à proximité de la surface de fond 24, entre ladite surface de fond 24 et la moitié de hauteur H/2. Préférentiellement, l'ensemble de cavités 29 s'étend dans la partie intermédiaire 212 de l'ensemble de bloc 21A.

Le volume de creux occupé par l'ensemble de cavités 29 est ainsi au moins égal à 1% du volume total VT de matière caoutchoutique de l'ensemble de bloc 21A et au plus égal à 5 % dudit volume total VT de matière caoutchoutique.

Comme il est plus particulièrement illustré à la figure 7, selon un mode de réalisation qui n'est pas selon l'invention, l'ensemble de cavités 29 présente une forme globalement concave. L'ensemble de cavités 29 comprend ainsi un fond 291 et une partie intermédiaire 292 disposée entre le fond 291 et la face de fuite 27. Le fond 291 est arrondi et il présente, vue en coupe, un rayon r

au moins égal à 0,5 mm et au plus égal à 1,5 mm. La partie intermédiaire 292 assure la jonction entre le fond 291 et la face de fuite 27. Cette partie intermédiaire 292 s'étend ainsi en direction de la surface de fond 24 en formant un angle α avec la face de fuite 27. Cet angle α est au moins égal à 30° et au plus égal à 70°. On notera que dans l'exemple de la figure 7, la face de fuite 27 est inclinée par rapport à une direction radiale Z. En variante, la face de fuite 27 est parallèle à cette direction radiale Z.

L'ensemble de cavités 29 présente également une profondeur p. Cette profondeur p est au moins égale à 0,2 mm et au plus égale à 1,5 mm. Préférentiellement, la profondeur p est au moins égale à 0,5 mm et au plus égale à 1 mm. Enfin, l'ensemble de bloc 21A a une hauteur H mesurée entre la surface de fond 24 et la surface de contact 23. A l'état neuf de la bande de roulement, cette hauteur H est au moins égale à 5,5 mm et au plus égale à 9 mm. Préférentiellement, à l'état neuf de la bande de roulement, la hauteur H est au plus égale à 7,5 mm.

La figure 8, selon un mode de réalisation qui n'est pas selon l'invention, illustre les effets de l'ensemble de cavités 29 sur les niveaux de pression s'exerçant sur l'ensemble de bloc 21A lors d'un freinage sur un sol 50. Plus particulièrement, la figure 8 présente un premier diagramme de répartition de pression 51A et un second diagramme de répartition de pression 51B. Le premier diagramme de répartition de pression 51A schématise la répartition de la pression dans l'ensemble de bloc 21A entre la face d'attaque 26 et l'incision 22. En phase de freinage, la pression prend une valeur maximale Pmax1 à proximité de l'incision 22. Le deuxième diagramme de répartition de pression 51B schématise la répartition de la pression dans l'ensemble de bloc 21B entre l'incision 22 et la face de fuite 27. En phase de freinage, la pression prend une valeur maximale Pmax2 à proximité de la face de fuite 27. On notera que la présence de l'ensemble de cavités 29 sur la face de fuite 27, fait baisser la valeur maximale Pmax2 et la rend inférieure à la valeur maximale Pmax1.

La figure 9 illustre un mode de réalisation de l'invention dans lequel l'ensemble de bloc 21A comprend un autre ensemble de cavités 59 s'étendant à partir de l'incision médiane 22 en direction de la face d'attaque 26 de l'ensemble de bloc 21A. Cet autre ensemble de cavités 59 est radialement à un même niveau N que l'ensemble de cavités 29 de la face de fuite 27 de l'ensemble de bloc 21A. Cet autre ensemble de cavités 59 s'étend à partir de l'incision 22. Il comprend au moins une cavité. Plus particulièrement, l'autre ensemble de cavités 59 présente une forme globalement concave. L'autre ensemble de cavités 59 comprend ainsi un fond 591 et une partie intermédiaire 592 disposée entre le fond 591 et l'incision 22. Le fond 591 est arrondi et il présente, vue en coupe, un rayon r' au moins égal à 0,5 mm et au plus égal à 1,5 mm. Avantageusement, le rayon r' de l'autre ensemble de cavités 59 est identique au rayon r de l'ensemble de cavités 29. La partie intermédiaire 592 assure la jonction entre le fond 591 et l'incision 22. Cette partie intermédiaire 592 donne la direction générale d'extension de l'autre ensemble de cavités 59 dans l'ensemble de bloc 21A. L'autre ensemble de cavités 59 s'étend ainsi en direction de la surface de fond 24 en formant un angle α' avec l'incision 22. Cet angle α' est au moins égal à 30° et au plus égal à 70°. Avantageusement, l'angle α' de l'autre ensemble de cavités 59 est identique à l'angle α de l'ensemble de cavités 29.

L'autre ensemble de cavités 59 présente également une profondeur p'. Cette profondeur p' est au moins égale à 0,2 mm et au plus égale à 1,5 mm. Préférentiellement, la profondeur p' est au moins égale à 0,5 mm et au plus égale à 1 mm. Avantageusement, la profondeur p' de l'autre ensemble de cavités 59 est identique à la profondeur p de l'ensemble de cavités 29.

L'ensemble de cavités 29, l'autre ensemble de cavités 59, l'incision 22 définissent un volume d'entailles VE dans l'ensemble de bloc 21A. Le rapport entre ce volume d'entailles VE sur le volume total de matière caoutchoutique VT de l'ensemble de bloc détermine un taux d'entaillement volumique TEV tel que TEV=VE/VT. Ce taux d'entaillement volumique est au moins égal à 0,24 et au plus égal à 0,35.

Pour l'ensemble des modes de réalisation illustrés aux figures 1 à 9, chaque ensemble de bloc est formé à partir d'un matériau caoutchoutique. Dans un mode de réalisation préférentiel, la composition de ce matériau caoutchoutique a une température de transition vitreuse comprise entre -40°C et -10°C, et préférentiellement entre -35°C et -15°C et un module de cisaillement mesuré à 60°C compris entre 0,5 MPa et 2 MPa, et préférentiellement entre 0,7 MPa et 1,5 MPa.

Dans un mode de réalisation préférentiel, la composition du matériau caoutchoutique des ensembles de bloc est à base d'au moins :

- -une matrice élastomère comprenant plus de 50% en masse d'un SBR solution qui porte une fonction silanol et une fonction amine ;

- 20 à 200 pce d'au moins une silice ;

- un agent de couplage pour coupler la silice au SBR solution ;

- 10 à 100 pce d'une résine hydrocarbonée présentant une Tg supérieure à 20°C ;

- 15 à 50 pce d'un plastifiant liquide.

Le SBR solution de ce mode de réalisation préférentiel est un copolymère de styrène et de butadiène préparé en solution. Il a pour caractéristique de porter une fonction silanol et une fonction amine. La fonction silanol du SBR solution portant une fonction silanol et une fonction amine peut par exemple être introduite par hydrosilylation de la chaîne élastomère par un silane portant un groupement alcoxysilane, suivie d'une hydrolyse de la fonction alcoxysilane en fonction silanol. La fonction silanol du SBR solution portant une fonction silanol et une fonction amine peut également être introduite par réaction des chaînes élastomères vivantes avec un composé polysiloxane cyclique tel que décrit dans EP 0 778 311 La fonction amine du SBR solution portant une fonction silanol et une fonction amine peut par exemple être introduite par un amorçage de la polymérisation avec un initiateur portant une telle fonction. Un SBR solution portant une fonction silanol et une fonction amine peut également être préparé par réaction des chaînes élastomères vivantes avec un composé portant une fonction alcoxysilane et une fonction amine selon le mode opératoire décrit dans la demande de brevet EP 2 285 852, suivie d'une hydrolyse de la fonction alcoxysilane en fonction silanol. Selon ce mode de préparation, la fonction silanol et la fonction amine sont préférentiellement situées à l'intérieur de la chaîne du SBR solution, en dehors des extrémités de chaîne. La réaction d'hydrolyse de la fonction alcoxysilane portée par le SBR solution en fonction silanol peut être conduite selon le mode opératoire décrit dans la demande de brevet EP 2 266 819 A1 ou bien par une étape de stripping de la solution contenant le SBR solution. La fonction amine peut être une amine primaire, secondaire ou tertiaire, de préférence tertiaire.

L'invention n'est pas limitée aux modes de réalisation et variantes présentées et d'autres modes de réalisation et variantes apparaîtront clairement à l'homme du métier sans sortir du cadre défini par les revendications ci-jointes.

Ainsi, l'ensemble de bloc peut comprendre trois blocs séparés par deux rainures. Les rainures apportent une certaine flexibilité à la bande de roulement ce qui améliore sa mise en contact avec le sol.

Ainsi, l'ensemble de cavités peut comprendre un nombre de cavité supérieur à 1. Ces cavités sont alors alignées dans la longueur de l'ensemble de bloc. Elles peuvent être de taille identique ou différente.

Ainsi, un ensemble de bloc peut comprendre une pluralité d'incisions. La densité SD de ces incisions dans l'ensemble de bloc est cependant inférieure ou égale à 70 mm⁻¹.

**Revendications**

1. Pneumatique comportant une bande de roulement (20) directionnelle de largeur (W), ladite bande de roulement (20) comportant deux bords (25A, 25B) et un centre (C) séparant ladite bande de roulement en deux parties de largeur sensiblement égale, ladite bande de roulement (20) comportant, sur une des deux parties de ladite bande de roulement (20), une pluralité d'ensembles de blocs (21A, 21B) se succédant selon une direction circonférentielle, chaque ensemble de blocs (21A, 21B) s'étendant d'un des bords (25A, 25B) de la bande de roulement (20) vers le centre (C) de ladite bande de roulement selon une certaine courbure non nulle, chaque ensemble de blocs (21A, 21B) comportant une face d'attaque (26) et une face de fuite (27), ledit pneumatique comprend, pour au moins un ensemble de blocs (21A, 21B), au moins un ensemble de cavités (29) s'étendant sur la face de fuite (27) dudit ensemble de blocs (21A, 21B), ladite bande de roulement (20) comportant une surface de fond (24) radialement à l'intérieur de ladite bande de roulement, ledit ensemble de blocs (21A) ayant une hauteur H, dans lequel l'ensemble de cavités (29) est entre la surface de fond (24) de la bande de roulement et la moitié de ladite hauteur H, ledit pneumatique est **caractérisé en ce que** l'ensemble de blocs (21A) comprend une incision médiane (22) s'étendant dans la longueur dudit ensemble de blocs (21A) et dans lequel ledit ensemble de blocs comprend un autre ensemble de cavités (59) s'étendant à partir de l'incision médiane (22) en direction de la face d'attaque (26) de l'ensemble de blocs, ledit autre ensemble de cavités (59) étant radialement à un même niveau que l'ensemble de cavités de la face de fuite dudit ensemble de blocs (21A).

2. Pneumatique selon la revendication 1, l'ensemble de cavités (29) ayant une forme concave comprenant un fond (291) de rayon r, **dans lequel** ledit rayon r est au moins égal à 0,5 mm et au plus égal à 1,5 mm.

3. Pneumatique selon l'une quelconque des revendications 1 ou 2, l'ensemble de cavités (29) ayant une profondeur p, **dans lequel** ladite profondeur p est au moins égale à 0,2 mm et au plus égale à 1,5 mm, et préférentiellement au moins égale à 0,5 mm et au plus égale à 1 mm.

4. Pneumatique selon la revendication 2, **dans lequel** l'ensemble des cavités (29) comprenant une partie intermédiaire (292) assurant la jonction entre le fond (291) de rayon r et la face de fuite (27) qui s'étend en direction de la surface de fond (24) de la bande de roulement en formant un angle α avec la face de fuite (27) dudit ensemble de blocs (21A), ledit angle α étant au moins égal à 30° et au plus égal à 70°.

5. Pneumatique selon l'une quelconque des revendications 1 à 4, l'ensemble de blocs comprenant une pluralité d'entailles définissant un volume d'entailles VE dans ledit ensemble de blocs, le rapport entre ledit volume d'entailles VE sur le volume total de matière caoutchoutique de l'ensemble de blocs déterminant un taux d'entaillement volumique TEV **tel que** TEV=VE/VT, le dit taux d'entaillement volumique étant au moins égal à 0,24 et au plus égal à 0,35.

6. Pneumatique selon la revendication 5, tout ou partie des entailles formant une ou plusieurs incisions (22) sur la surface de contact de l'ensemble de blocs selon une densité d'incision SD, ladite densité d'incision SD correspondant au rapport entre une somme de la/des longueur(s) projetée(s) (lpyi) de la/des incision(s) selon une direction axiale (Y) sur le produit d'un pas P associé à l'ensemble de blocs (21A) et de la moitié de la largeur (W) de la bande de roulement, l'ensemble étant multiplié par 1000, tel que

$$SD = \frac{\sum_{i=1}^{n} lpyi}{P*W/2} * 1000,$$

avec n le nombre d'incisions dans le motif et lpyi la longueur projetée de la ième incision, **dans lequel** la densité d'incision SD dans l'ensemble de blocs est au moins égale à 10 mm$^{-1}$ et au plus égale à 70 mm$^{-1}$.

7. Pneumatique selon l'une quelconque des revendications 1 à 6, **dans lequel,** dans la bande de roulement à l'état neuf, l'ensemble de blocs (21A) a une hauteur maximale au moins égale à 5,5 mm et au plus égale à 9 mm, et de préférence au plus égale à 7,5 mm.

8. Pneumatique selon l'une quelconque des revendications 1 à 7, **dans lequel** la composition du matériau caoutchoutique des blocs a une température de transition vitreuse Tg comprise entre -40°C et -10°C et préférentiellement entre -35°C et -15°C et un module complexe de cisaillement dynamique G* compris entre 0,5 MPa et 2 MPa, et préférentiellement entre 0,7 MPa et 1,5 MPa, les mesures étant réalisées selon une sollicitation sinusoïdale en cisaillement simple alterné, ayant une amplitude crête-crête égale à 0,7 MPa et une fréquence égale à 10 Hz, à une température de 60°C.

9. Pneumatique selon l'une quelconque des revendications 1 à 8, **dans lequel** ledit pneumatique a une certification hiver 3PMSF, ladite certification étant indiquée sur un flanc (30A, 30B) du pneumatique.

**Patentansprüche**

1. Reifen, welcher einen laufrichtungsgebundenen Laufstreifen (20) der Breite (W) aufweist, wobei der Laufstreifen (20) zwei Ränder (25A, 25B) und eine Mitte (C), die den Laufstreifen in zwei Teile von im Wesentlichen gleicher Breite teilt, aufweist, wobei der Laufstreifen (20) auf einem der zwei Teile des Laufstreifens (20) mehrere Anordnungen von Blöcken (21A, 21B) aufweist, die in einer Umfangsrichtung aufeinanderfolgen, wobei sich jede Anordnung von Blöcken (21A, 21B) von einem der Ränder (25A, 25B) des Laufstreifens zur Mitte (C) des Laufstreifens hin mit einer gewissen, von null verschiedenen Krümmung erstreckt, wobei jede Anordnung von Blöcken (21A, 21B) eine Vorderfläche (26) und eine Rückfläche (27) aufweist, wobei der Reifen für wenigstens eine Anordnung von Blöcken (21A, 21B) wenigstens eine Anordnung von Hohlräumen (29) umfasst, die sich auf der Rückfläche (27) der Anordnung von Blöcken (21A, 21B) erstrecken, wobei der Laufstreifen (20) eine Bodenfläche (24) radial im Inneren des Laufstreifens aufweist, wobei die Anordnung von Blöcken (21A) eine Höhe H aufweist, wobei sich die Anordnung von Hohlräumen (29) zwischen der Bodenfläche (24) des Laufstreifens und der Hälfte der Höhe H befindet, wobei der Reifen **dadurch gekennzeichnet ist, dass** die Anordnung von Blöcken (21A) einen mittig verlaufenden Einschnitt (22) umfasst, der sich in der Länge der Anordnung von Blöcken (21A) erstreckt, und wobei die Anordnung von Blöcken eine weitere Anordnung von Hohlräumen (59) umfasst, die sich von dem mittig verlaufenden Einschnitt (22) aus in Richtung der Vorderfläche (26) der Anordnung von Blöcken erstrecken, wobei sich die weitere Anordnung von Hohlräumen (59) radial auf derselben Höhe wie die Anordnung von Hohlräumen der Rückfläche der Anordnung von Blöcken (21A) befindet.

2. Reifen nach Anspruch 1, wobei die Anordnung von Hohlräumen (29) eine konkave Form aufweist, die einen Boden (291) mit dem Radius r umfasst, wobei der Radius r mindestens gleich 0,5 mm und höchstens gleich 1,5 mm ist.

3. Reifen nach einem der Ansprüche 1 oder 2, wobei die Anordnung von Hohlräumen (29) eine Tiefe p aufweist, wobei die Tiefe p mindestens gleich 0,2 mm und höchstens gleich 1,5 mm und vorzugsweise mindestens gleich 0,5 mm und höchstens gleich 1 mm ist.

4. Reifen nach Anspruch 2, wobei die Anordnung von Hohlräumen (29) einen Zwischenteil (292) umfasst, der die Verbindung zwischen dem Boden (291) mit dem Radius r und der Rückfläche (27) sicherstellt und sich in Richtung der Bodenfläche (24) des Laufstreifens erstreckt, wobei er einen Winkel α mit der Rückfläche (27) der Anordnung von Blöcken (21A) bildet, wobei der Winkel α mindestens gleich 30° und höchstens gleich 70° ist.

5. Reifen nach einem der Ansprüche 1 bis 4, wobei die Anordnung von Blöcken mehrere Ausnehmungen umfasst, die ein Volumen von Ausnehmungen VE in der Anordnung von Blöcken definieren, wobei das Verhältnis des Volumens der Ausnehmungen VE zum Gesamtvolumen des Kautschukmaterials der Anordnung von Blöcken einen volumenbezogenen Negativprofilanteil TEV definiert, so dass TEV = VE/VT ist, wobei der volumenbezogene Negativprofilanteil mindestens gleich 0,24 und höchstens gleich 0,35 ist.

6. Reifen nach Anspruch 5, wobei alle Ausnehmungen oder ein Teil derselben einen oder mehrere Einschnitte (22) auf der Kontaktfläche der Anordnung von Blöcken mit einer Einschnittsdichte SD bilden, wobei die Einschnittsdichte SD dem mit 1000 multiplizierten Verhältnis einer Summe der projizierten Länge(n) (lpyi) des Einschnitts/der Einschnitte in einer axialen Richtung (Y) zum Produkt einer der Anordnung von Blöcken (21A) zugeordneten Teilung P mit der Hälfte der Breite (W) des Laufstreifes ent-

$$SD = \frac{\sum_{i=1}^{n} lpyi}{P * W/2} * 1000$$

spricht, so dass ist, wobei n die Anzahl der Einschnitte im Muster und lpyi die projizierte Länge des i-ten Einschnitts ist, wobei die Einschnittsdichte SD in der Anordnung von Blöcken mindestens gleich 10 mm⁻¹ und höchstens gleich 70 mm⁻¹ ist.

7. Reifen nach einem der Ansprüche 1 bis 6, wobei im Laufstreifen im Neuzustand die Anordnung von Blöcken (21A) eine maximale Höhe von mindestens 5,5 mm und höchstens 9 mm und vorzugsweise von höchstens 7,5 mm aufweist.

8. Reifen nach einem der Ansprüche 1 bis 7, wobei die Zusammensetzung des Kautschukmaterials der Blöcke eine Glasübergangstemperatur Tg zwischen -40 °C und -10 °C und vorzugsweise zwischen -35 °C und -15 °C und einen komplexen dynamischen Schubmodul G* zwischen 0,5 MPa und 2 MPa und vorzugsweise zwischen 0,7 MPa und 1,5 MPa aufweist, wobei die Messungen bei einer wechselnden einfachen sinusförmigen Schubbeanspruchung mit einer Doppelamplitude von 0,7 MPa und einer Frequenz von 10 Hz durchgeführt werden, bei einer Temperatur von 60 °C.

9. Reifen nach einem der Ansprüche 1 bis 8, wobei der Reifen eine Winter-Zertifizierung 3PMSF aufweist, wobei diese Zertifizierung auf einer Seitenwand (30A, 30B) des Reifens angegeben ist.

**Claims**

1. Tyre comprising a directional tread (20) of width (W), said tread (20) comprising two edges (25A, 25B) and a centre (C) dividing said tread into two parts of substantially equal width, said tread (20) comprising, on one of the two parts of said tread (20), a plurality of sets of blocks (21A, 21B) succeeding one another in a circumferential direction, each set of blocks (21A, 21B) extending from one of the edges (25A, 25B) of the tread (20) towards the centre (C) of said tread with a certain non-zero curvature, each set of blocks (21A, 21B) comprising a leading-edge face (26) and a trailing-edge face (27), said tyre comprises, for at least one set of blocks (21A, 21B), at least one set of cavities (29) extending over the trailing-edge face (27) of said set of blocks (21A, 21B), said set of cavities (29) comprising at least one cavity, said tread (20) having a bottom surface (24) radially on the inside of said tread, said set of blocks (21A) having a height H, wherein the set of cavities (29) is between the bottom surface (24) of the tread and half of said height H, **said tyre is characterized in that** the set of blocks (21A) comprises a sipe (22) extending along the length of said set of blocks (21A) and wherein said set of blocks comprises another set of cavities (59) extending from the median sipe (22) towards the leading-edge face (26) of the set of blocks, said other set of cavities (59) being radially at the same level as the set of cavities of the trailing-edge face of said set of blocks (21A).

2. Tyre according to Claim 1, the set of cavities (29) having a concave shape comprising a bottom (291) of radius r, **wherein** said radius r is at least equal to 0.5 mm and at most equal to 1.5 mm.

3. Tyre according to either one of Claims 1 and 2, the set of cavities (29) having a depth p, **wherein** said depth p is at least equal to 0.2 mm and at most equal to 1.5 mm, preferably at least equal to 0.5 mm and at most equal to 1 mm.

4. Tyre according to Claim 2, **wherein** an intermediate part (292) providing the connection between the bottom (291) of radius r and the trailing-edge face (27) extends towards the bottom surface (24) of the tread making an angle α with the trailing-edge face (27) of said set of blocks (21A), said angle α being at least equal to 30° and at most equal to 70°.

5. Tyre according to any one of Claims 1 to 4, the set of blocks comprising a plurality of voids defining a voids volume VE in said set of blocks, the ratio of said voids volume VE to the total volume of rubbery material of the set of blocks determining a volumetric void ratio TEV such that TEV=VE/VT, said volumetric void ratio being at least equal to 0.24 and at most equal to 0.35.

6. Tyre according to Claim 5, all or some of the voids forming one or more sipes (22) on the contact surface of the set of blocks with a sipes density SD, said sipes density SD corresponding to the ratio of a sum of the projected length(s) (lpyi) of the sipe(s) in an axial direction (Y) to the product of a pitch P associated with the set of blocks (21A) times half the width (W) of the tread, all multiplied by 1000, such that

$$SD = \frac{\sum_{i=1}^{n} lpyi}{P*W/2} * 1000$$

, where n is the number of sipes in the pattern and lpyi is the projected length of the ith sipe, wherein the sipes density SD in the set of blocks is at least equal to 10 mm-1 and at most equal to 70 mm-1.

7. Tyre according to any one of Claims 1 to 6, wherein, in the tread when new, the set of blocks (21A) has a maximum height at least equal to 5.5 mm and at most equal to 9 mm, and preferably at most equal to 7.5 mm.

8. Tyre according to any one of Claims 1 to 7, wherein the composition of the rubbery material of the blocks has a glass transition temperature Tg comprised between -40°C and -10°C and preferably between -35°C and -15°C and a complex dynamic shear modulus G* comprised between 0.5 MPa and 2 MPa, and preferably between 0.7 MPa and 1.5 MPa, the measurements being taken under simple alternating sinusoidal shear stress with a peak-to-peak amplitude equal to 0.7 MPa and a frequency equal to 10 Hz, at a temperature of 60°C.

9. Tyre according to any one of Claims 1 to 8, wherein said tyre has a 3PMSF winter certification, said certification being indicated on a sidewall (30A, 30B) of the tyre.

FIG. 1

FIG. 2

FIG. 3

FIG. 4

FIG. 5

FIG. 6

FIG. 7

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016134988 A
- EP 3383671 A1
- JP H09254609 A
- EP 1097826 A1
- EP 2516181 A1
- JP H11180115 A
- EP 0778311 A
- EP 2285852 A
- EP 2266819 A1